# EUROPÄISCHE PATENTSCHRIFT

(11) **EP 1 085 233 B1**
(45) Veröffentlichungstag und Bekanntmachung des Hinweises auf die Patenterteilung: **22.12.2004**
(21) Anmeldenummer: 00116738.6
(22) Anmeldetag: 03.08.2000
(51) Int. Cl.: F16F 9/48, F16F 9/342, F16F 9/06, B60G 17/08

(54) **Hydraulischer Stossdämpfer für Kraftfahrzeuge**
Hydraulic shock absorber for motor vehicles
Amortisseur de chocs hydraulique pour véhicules automobiles

(30) Priorität: 15.09.1999 DE 19944183
(43) Veröffentlichungstag der Anmeldung: 21.03.2001
(73) Patentinhaber: Bayerische Motoren Werke Aktiengesellschaft, 80809 München (DE)
(72) Erfinder: Peres, Laszlo, 85391 Allershausen (DE)

(56) Entgegenhaltungen:
- DE-A- 4 028 785
- DE-A- 19 948 328
- DE-B- 1 015 327
- US-A- 3 352 387

## Beschreibung

Die Erfindung bezieht sich auf einen hydraulischen Stoßdämpfer für Kraftfahrzeuge nach dem Oberbegriff des Hauptanspruches.

Ein derartiger Stoßdämpfer ist aus der DE 40 28 785 A1 bekannt. Nach dieser Druckschrift besteht der Stoßdämpfer aus einem flüssigkeitsgefüllten Zylinder, in dem einseitig eine Kolbenstange mit einem Hauptkolben eintaucht. Dieser trennt das Innere des Zylinders in zwei Arbeitskammern. Zur Erzeugung der Dämpfwirkung sind am Hauptkolben durchgehende Bohrungen vorgesehen, über die bei Bewegung des Hauptkolbens ein Flüssigkeitsaustausch zwischen den beiden Arbeitskammern erfolgt. Der Hauptkolben trägt einen Hilfskolben, der am Ende der Eintauchbewegung des Hauptkolbens in einen ortsfest gehaltenen Hilfszylinder eintritt. Eine Spaltöffnung zwischen dem Hilfskolben und dem Hilfszylinder ist so ausgestaltet, daß sie sich mit zunehmender Eindringtiefe des Hilfskolbens verengt und dadurch eine zunehmende Dämpfwirkung erzeugt. Die Eintrittsöffnung am Hilfszylinder führt zu einem flüssigkeitsgefüllten Raum, mit gegen Federkraft veränderbaren Volumens. Bei durch den Hilfskolben verschlossener Eintrittsöffnung führt die damit verbundene Druckerhöhung in der dem Hilfskolben zugeordneten Arbeitskammer zum Öffnen eines Ventils, das eine Verbindung von dieser Arbeitskammer zu dem Raum herstellt.

Bei einer solchen Ausführung eines hydraulischen Stoßdämpfers wird der Grad der Dämpfung in der Druckstufe wegabhängig größer. Der Grad der Dämpfung in der Zugstufe ist unabhängig vom Einfederweg konstant.

Aufgabe der Erfindung ist es, einen gattungsgemäßen hydraulischen Stoßdämpfer so weiterzuentwickeln, daß der Stoßdämpfer auch in der Zugstufe eine wegabhängige Dämpfwirkung erzeugt.

Die Aufgabe wird erfindungsgemäß mit den kennzeichnenden Merkmalen des Hauptanspruches gelöst. Vorteilhafte Ausgestaltungen der Erfindung ergeben sich aus den Unteransprüchen.

Nach der Erfindung besteht ein Hydraulischer Stoßdämpfer für Kraftfahrzeuge aus einem flüssigkeitsgefüllten Zylinder, in dem einseitig eine Kolbenstange mit einem Hauptkolben eintaucht. Dieser trennt verschiebbar innerhalb des Zylinders zwei Arbeitskammern unter Flüssigkeitsaustausch voneinander, wobei der Hauptkolben einen Hilfskolben trägt, der am Ende der Eintauchbewegung des Hauptkolbens in einen axial im Zylinder festsitzenden Hilfszylinder eintritt, dessen Eintrittsöffnung zu einem flüssigkeitsgefüllten Raum mit gegen Federkraft veränderbaren Volumens führt. Bei durch den Hilfskolben verschlossener Eintrittsöffnung führt die damit verbundene Druckerhöhung in der dem Hilfskolben zugeordneten Arbeitskammer zum Öffnen eines Ventils, das eine Verbindung von dieser Arbeitskammer zu dem Raum herstellt. Die Erfindung ist dadurch gekennzeichnet, daß der Flüssigkeitsaustausch zwischen den zwei Arbeitskammern des Zylinders mindestens über eine Verbindung der beiden Arbeitskammern stattfindet, die durch den Hilfskolben verläuft und deren Öffnungsquerschnitt zur Arbeitskammer hin sich durch das Einschieben des Hilfskolbens in den Hilfszylinder verringert.

Ein so ausgeführter hydraulischer Stoßdämpfer dämpft in der Zugstufe bei zunehmender Ausfederung immer weicher. In der Druckstufe nimmt die Dämpfung durch den Flüssigkeitsaustausch zwischen den zwei Arbeitskammern des Zylinders über die Verbindung der beiden Arbeitskammern, die durch den Hilfskolben verläuft, über den Einfederweg kontinuierlich zu.

Ein Ausführungsbeispiel des Erfindungsgegenstandes zeichnet sich dadurch aus, daß die Verbindung der beiden Arbeitskammern durch den Hilfskolben und durch die Kolbenstange verläuft, indem diese in axialer Richtung, aneinander angrenzend, hohl ausgebildet sind und in radialer Richtung jeweils mindestens eine Öffnung zu der zugehörigen Arbeitskammer hin besitzen. Die Öffnung des Hilfskolbens zur Arbeitskammer hin ist so gestaltet, daß sie während einer Eintauchbewegung des Hilfskolbens in den Hilfszylinder von diesem verschlossen wird.

Eine solche Ausführung des Erfindungsgegenstandes ist vorteilhafterweise leicht zu fertigen.

Nach einem weiteren Ausführungsbeispiel des Erfindungsgegenstandes besitzt der Hilfskolben zu der ihm zugeordneten Arbeitskammer hin mehrere radial gerichtete Öffnungen, die in axialer Richtung so angeordnet sind, daß sie beim Eintauchen des Hilfskolbens in die Eintrittsöffnung nacheinander verschlossen werden.

Das hat den Vorteil, daß die Öffnungen am Hilfskolben sehr einfach, zum Beispiel als verschieden große Bohrungen regelmäßigen oder unregelmäßigen axialen Abstands voneinander, genau so angebracht werden können, wie sie zur gewünschten Beeinflussung des Dämpfungsverhaltens des Stoßdämpfers nötig sind.

Als weiterer Vorteil der Erfindung kann angesehen werden, daß die heute üblichen kinematischen Umlenksysteme bei der Anlenkung eines Federbeins an eine Hinterradschwinge durch den Einsatz eines Dämpfers gemäß der Erfindung nicht mehr notwendig sind. Damit werden wartungs- und verschleißintensive Teile mit Lagerstellen an einem Motorradfahrwerk erheblich reduziert.

Ein bevorzugtes Ausführungsbeispiel der Erfindung ist in der nachfolgenden Beschreibung und der dazugehörigen Zeichnung näher dargestellt.

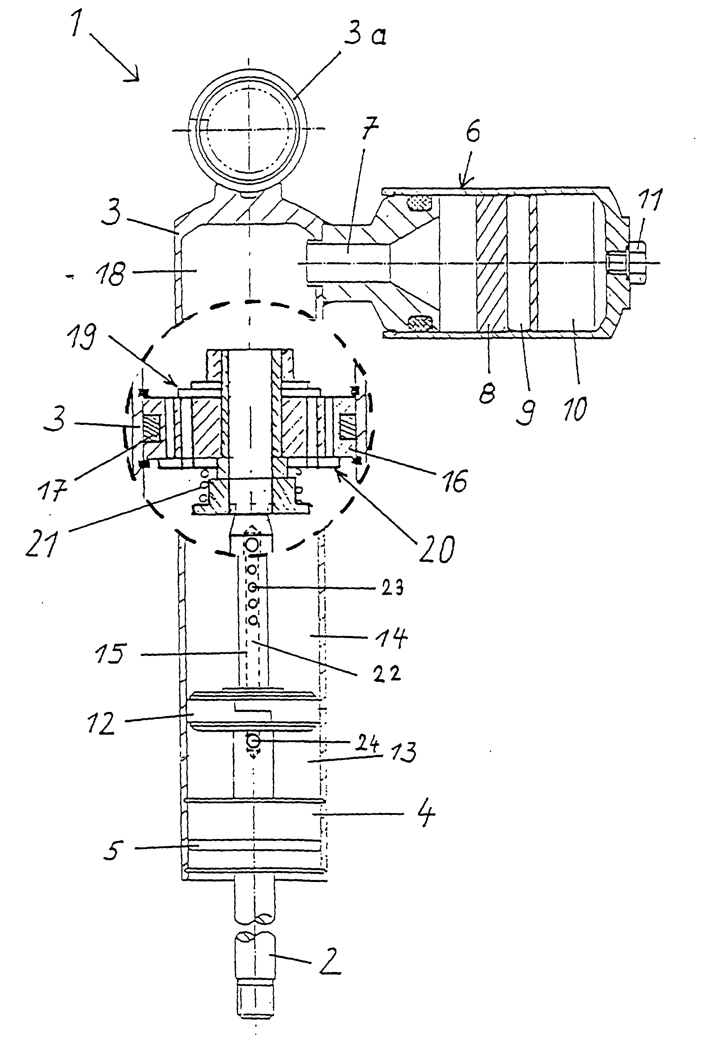

Die Zeichnung zeigt in ihrer einzigen Figur einen hydraulischen Stoßdämpfer 1 mit einer Kolbenstange 2, die einseitig in einen Zylinder 3 eintaucht. Der Zylinder 3 besitzt an seinem oberen Ende ein Befestigungsauge 3a, an dem in nicht dargestellter Weise der Fahrzeugaufbau eines Motorrades befestigt ist. Die Kolbenstange 2 steht in zeichnerisch nicht wiedergegebener Verbindung mit der Radnabe eines Fahrzeugrades. Eine zusätzliche Verbindung zwischen dem Fahrzeugaufbau und der genannten Radnabe ist, wie bekannt und deshalb nicht dargestellt, durch eine geeignete Fahrzeugfederung vorgesehen.

Der Zylinder 3 ist mit Flüssigkeit gefüllt, die durch einen kreisringförmigen Deckel 4 mit einer Dichtung 5 am Austreten aus dem Zylinder 3 gesichert ist. Für diese Aufgabe ist desweiteren eine in der Zeichnung nicht sichtbare Dichtung zwischen dem Deckel 4 und der Kolbenstange 2 vorgesehen.

Am oberen Ende des Zylinders 3 ist ein Ausgleichsgefäß 6 angeschweißt, das über eine Öffnung 7 mit der Flüssigkeit innerhalb des Zylinders 3 in Verbindung steht. Innerhalb des Ausgleichsgefäßes 6 trennt ein verschiebbarer Kolben 8 die Flüssigkeit innerhalb des Zylinders 3 von einer gasgefüllten Kammer 10. Eine Dichtung 9 am Kolben 8 sowie eine entsprechend abgedichtete Schraube 11 in einer hierzu zugeordneten Öffnung am Ausgleichsgefäß sorgen für den gasdichten Abschluß der Kammer 10. Das Gas ist vor Inbetriebnahme des hydraulischen Stoßdämpfers 1 mit Überdruck eingefüllt worden, um der Flüssigkeit im Zylinder 3 beim Eintauchen der Kolbenstange 2 und bei thermisch bedingter Ausdehnung eine Ausgleichsmöglichkeit zu geben.

Die Kolbenstange 2 trägt einen Hauptkolben 12, der den Innenraum des Zylinders 3 in zwei Arbeitskammern 13 und 14 aufteilt. Über zeichnerisch nicht wiedergegebene Öffnungen innerhalb des Hauptkolbens 12 erfolgt ein dämpfwirksamer Flüssigkeitsaustausch zwischen den Arbeitskammern 13 und 14, wenn die Kolbenstange mit dem Hauptkolben 12 gegenüber dem Zylinder 3 bewegt wird.

Der Hauptkolben 12 trägt an seinem oberen Ende einen Hilfskolben 15 mit einem konisch zugespitzten Ende, das innerhalb des strichliert gekennzeichneten und vergrößert wiedergegebenen Bereich in der Zeichnung zu erkennen ist. In diesem Bereich ist weiterhin ein dem Hilfskolben 15 zugeordneter Hilfszylinder 16 zu erkennen, der durch geeignete Mittel axial am Zylinder 3 fest positioniert ist. Der Hilfszylinder 16 trennt die Arbeitskammer 14 von einem weiteren flüssigkeitsgefüllten Raum 18 innerhalb des Zylinders 3.

Der Hilfszylinder 16 trägt an seinem Außenumfang eine Dichtung 17, die an dieser Stelle einen Flüssigkeitsaustausch zwischen der Arbeitskammer 14 und dem Raum 18 verhindert.

Bis zum Eintreten des Hilfskolbens 15 in den Hilfszylinder 16 wirkt ausschließlich die durch den Hauptkolben 12 erzeugte Flüssigkeitsdämpfung innerhalb des hydraulischen Stoßdämpfers 1. Beim Eintauchen des Hilfskolbens 15 in den Hilfszylinder 16 sorgt zunächst das konisch zulaufende Ende des Hilfskolbens 15 dafür, daß sich die Dämpfwirkung innerhalb des hydraulischen Stoßdämpfers 1 erhöht. Sobald der Hilfskolben 15 mit seinem zylindrischen Abschnitt in den Hilfszylinder 16 eintaucht, sind der Raum 18 und die Arbeitskammer 14 flüssigkeitsdicht voneinander getrennt. Demzufolge wirkt der in der Arbeitskammer 14 erhöhte Druck nicht mehr auf den gasgefederten Kolben 8. Der somit höhere Druck in der Arbeitskammer 14 beaufschlagt ein von einem Grenzdruck abhängig öffnendes Ventil 19 am Hilfszylinder 16, so daß eine weitere Eintauchbewegung der Kolbenstange 2 in den Zylinder 3 mit dadurch zusätzlich erzeugter Dämpfung erfolgt. Auf den Aufbau des Ventiles 19 wird im folgenden nicht weiter eingegangen, da es sich um ein allgemein bekanntes technisches Bauteil handelt. Dies trifft auch auf ein Rückschlagventil 20 zu, das bei Überdruck in der Arbeitskammer 14 gegenüber dem Raum 18 verschlossen ist und umgekehrt öffnet. Dadurch läßt sich der Hilfskolben 15 leicht und damit schnell aus dem Hilfszylinder 16 nach unten herausbewegen. Eine geringfügig am Hilfszylinder 16 vorgespannte Schraubenfeder 21 sorgt für ein geräuschloses Öffnen des Rückschlagventiles 20.

Zusätzlich sind der Hilfskolben 15 und die Kolbenstange 2 in axialer Richtung, aneinander angrenzend, teilweise hohl ausgeführt und der Hilfskolben 15 besitzt zur Verbindung dieses Hohlraums 22 mit der Arbeitskammer 14 mehrere radial gerichtete Öffnungen 23, die in axialer Richtung so angeordnet sind, daß sie beim Eintauchen des Hilfskolbens 15 in die Eintrittsöffnung nacheinander verschlossen werden. Die Kolbenstange 2 besitzt zur Verbindung des Hohlraums 22 mit der Arbeitskammer 13 eine radial gerichtete Öffnung 24. Auf diese Weise sind die beiden Arbeitskammern (13,14) so miteinander verbunden, daß zwischen ihnen ein dämpfwirksamer Flüssigkeitsaustausch stattfinden kann, zusätzlich zu dem, durch die nicht gezeichneten Öffnungen innerhalb des Hauptkolbens 12.

Die Wirkung dieses zusätzlichen dämpfwirksamen Flüssigkeitsaustauschs ist allerdings anders, da die Öffnungen 23 beim Eintauchen des Hilfskolbens 15 in die Eintrittsöffnung nacheinander verschlossen werden. Beim Einfedern in der Druckstufe werden nacheinander die Öffnungen 23 vom Hilfszylinder 16 verschlossen, wodurch die Dämpfung wegabhängig kontinuierlich zunimmt bis zur vollständigen Überdeckung der Öffnungen 23 durch den Hilfszylinder 16. Die maximale Zusatzdämpfung wird erst dann erreicht, wenn die Öffnungen 23 ganz verdeckt sind.

Beim Ausfedern in der Zugstufe sind zunächst die Öffnungen 23 vom Hilfszylinder 16 verschlossen, wodurch ein dämpfwirksamer Flüssigkeitsaustausch nur durch die nicht gezeichneten Öffnungen innerhalb des Hauptkolbens 12 stattfinden kann. Die Dämpfung ist somit hart. Bei zunehmender Ausfederung werden die Öffnungen 23 freigelegt und die Zugstufendämpfung wird mit zunehmendem Ausfederweg weicher.

## Patentansprüche

1. Hydraulischer Stoßdämpfer für Kraftfahrzeuge, bestehend aus einem flüssigkeitsgefüllten Zylinder (3), in den einseitig eine Kolbenstange (2) mit einem Hauptkolben (12) eintaucht, der verschiebbar innerhalb des Zylinders (3) zwei Arbeitskammern (13,14) unter Flüssigkeitsaustausch voneinander trennt, wobei der Hauptkolben (12) einen Hilfskolben (15) trägt, der am Ende der Eintauchbewegung des Hauptkolbens (12) in einen axial im Zylinder (3) festsitzenden Hilfszylinder (16) eintritt, dessen Eintrittsöffnung zu einem flüssigkeitsgefüllten Raum (18) mit gegen Federkraft veränderbaren Volumens führt und wobei bei durch den Hilfskolben (15) verschlossener Eintrittsöffnung die damit verbundene Druckerhöhung in der dem Hilfskolben (15) zugeordneten Arbeitskammer (14) zum Öffnen eines Ventils (19) führt, das eine Verbindung von dieser Arbeitskammer (14) zu dem Raum (18) herstellt, **dadurch gekennzeichnet, daß** der Flüssigkeitsaustausch zwischen den zwei Arbeitskammern (13,14) des Zylinders (3) mindestens über eine Verbindung der beiden Arbeitskammern (13,14) stattfindet, die durch den Hilfskolben (15) verläuft und deren Öffnungsquerschnitt zur Arbeitskammer (14) hin sich durch das Einschieben des Hilfskolbens (15) in den Hilfszylinder (16) verringert.

2. Hydraulischer Stoßdämpfer nach Anspruch 1, **dadurch gekennzeichnet, daß** die Verbindung der beiden Arbeitskammern (13,14) durch den Hilfskolben (15) und durch die Kolbenstange (2) verläuft, indem diese in axialer Richtung aneinander angrenzend hohl ausgebildet sind und in radialer Richtung jeweils mindestens eine Öffnung (23,24) zu der zugehörigen Arbeitskammer (14,13) hin besitzen, wobei die Öffnung (23) des Hilfskolbens (15) zur Arbeitskammer (14) hin so gestaltet ist, daß sie während einer Eintauchbewegung des Hilfskolbens (15) in den Hilfszylinder (16) von diesem verschlossen wird.

3. Hydraulischer Stoßdämpfer nach Anspruch 2, **dadurch gekennzeichnet, daß** der Hilfskolben (15), zur Verbindung der beiden Arbeitskammern (13,14), zur Arbeitskammer (14) hin mehrere radial gerichtete Öffnungen (23) besitzt, die in axialer Richtung so angeordnet sind, daß sie beim Eintauchen des Hilfskolbens (15) in die Eintrittsöffnung nacheinander verschlossen werden.

## Claims

1. A hydraulic shock-absorber for motor vehicles comprising a liquid-filled cylinder (3) into which a piston rod (2) plunges at one end together with a main piston (12) which is movable inside the cylinder (3) and separates two working compartments (13, 14) from one another with liquid exchange, wherein the main piston (12) bears an auxiliary piston (15) which, at the end of the plunging motion of the main piston (12), enters an auxiliary cylinder (16) axially fixed in the cylinder (3) and having an inlet opening leading to a liquid-filled chamber (18) having a volume variable by spring force, wherein when the inlet opening is closed by the auxiliary spring (15), the resulting pressure increase in the working compartment (14) associated with the auxiliary piston (15) opens a valve (19) which makes a connection between the working compartment (14) and the chamber (18), **characterised in that** the liquid exchange between the two working compartments (13, 14) of the cylinder (3) occurs at least via a connection between the two working compartments (13, 14) which extends through the auxiliary piston (15) and the opening cross-section of which towards the working compartment (14) is reduced when the auxiliary piston (15) plunges into the auxiliary cylinder (16).

2. A hydraulic shock-absorber according to claim 1, **characterised in that** the connection between the two working compartments (13, 14) is via the auxiliary piston (15) and the piston-rod (2), **in that** the piston (15) and rod (2) are hollow adjoining one another in the axial direction and in the radial direction each have at least one opening (23, 24) towards the associated working compartment (14, 13), wherein the opening (23) of the auxiliary piston (15) into the working compartment (14) is shaped so that it is closed by the auxiliary cylinder (16) when the auxiliary piston (15) plunges into the auxiliary cylinder (16).

3. A hydraulic shock-absorber according to claim 2, **characterised in that**, for the purpose of connecting the two auxiliary compartments (13, 14), the auxiliary piston (15) has a number of radial openings (23) towards the working compartment (14) and so disposed in the axial direction that they are successively closed when the auxiliary piston (15) plunges into the inlet opening.

## Revendications

1. Amortisseur hydraulique pour véhicules automobiles, constitué d'un cylindre (3) rempli de liquide, dans lequel s'enfonce d'un côté une tige de piston (2) comportant un piston principal (12), qui sépare de façon mobile à l'intérieur du cylindre (3) deux chambres de travail (13, 14) en permettant un échange de liquide, le piston principal (12) comportant un piston auxiliaire (15), qui pénètre à la fin du mouvement d'enfoncement du piston principal (12) dans un cylindre auxiliaire (16) logé axialement de façon fixe dans le cylindre (3), dont l'ouverture d'entrée conduit à un compartiment (18) rempli de liquide dont le volume peut varier à l'encontre d'une force élastique, et lorsque l'ouverture d'entrée est fermée par le piston auxiliaire (15), l'augmentation de pression qui en résulte dans la chambre de travail (14) associée au piston auxiliaire (15) conduit à l'ouverture d'une soupape (19) qui établit une liaison entre cette chambre de travail (14) et le compartiment (18),
**caractérisé en ce que**
l'échange de liquide entre les deux chambres de travail (13, 14) du cylindre (3) s'effectue au moins par le biais d'une liaison entre les deux chambres de travail (13, 14), qui s'étend à travers le piston auxiliaire (15) et dont la section transversale d'ouverture vers la chambre de travail (14) se rétrécit à mesure de l'enfoncement du piston auxiliaire (15) dans le cylindre auxiliaire (16).

2. Amortisseur hydraulique selon la revendication 1,
**caractérisé en ce que**
la liaison entre les deux chambres de travail (13, 14) s'étend à travers le piston auxiliaire (15) et à travers la tige de piston (2), par le fait que ces éléments sont configurés de façon creuse, en direction axiale, et de façon contiguë l'un à l'autre, et possèdent en direction radiale respectivement au moins une ouverture (23, 24) menant à la chambre de travail (14, 13) associée, l'ouverture (23) du piston auxiliaire (15) vers la chambre de travail (14) étant conçue de telle sorte qu'elle est fermée par celui-ci pendant un mouvement d'enfoncement du piston auxiliaire (15) dans le cylindre auxiliaire (16).

3. Amortisseur hydraulique selon la revendication 2,
**caractérisé en ce que**
le piston auxiliaire (15), pour relier les deux chambres de travail (13, 14), possède plusieurs ouvertures (23) orientées radialement vers la chambre de travail (14), et disposées en direction axiale de telle sorte qu'elles sont fermées les unes après les autres lors de l'enfoncement du piston auxiliaire (15) dans l'ouverture d'entrée.
